# EUROPÄISCHE PATENTSCHRIFT

(11) **EP 4 032 783 B1**
(45) Veröffentlichungstag und Bekanntmachung des Hinweises auf die Patenterteilung: **01.05.2024**
(21) Anmeldenummer: 22172752.2
(22) Anmeldetag: 11.05.2022
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(43) Veröffentlichungstag der Anmeldung: 27.07.2022
(73) Patentinhaber: thyssenkrupp Presta AG, 9492 Eschen (LI); thyssenkrupp AG, 45143 Essen (DE)
(72) Erfinder: Willi, Andreas, 6923 Lauterach (AT); Kreutz, Daniel, 6800 Feldkirch (AT); Blättler, Simon, 9472 Grabs (CH); Riedmann, Dr. Patrick, 6850 Dornbirn (AT); Fejes, Tamás, 3400 Mezokövesd (HU)
(74) Vertreter: thyssenkrupp Intellectual Property GmbH

(56) Entgegenhaltungen:
- EP-A1- 3 771 619
- DE-A1-102020 109 779
- DE-A1-102020 202 536
- DE-A1-102021 108 224

## Beschreibung

### Stand der Technik

Die Erfindung betrifft eine Lenksäule für ein Kraftfahrzeug, die zwei relativ zueinander in zwei nichtparallelen Verstellrichtungen verstellbare Bauteile und eine Positionserfassungseinrichtung aufweist, die einen mit dem einem Bauteil verbundenen Sensor umfassend mindestens eine Sensoreinheit aufweist, und ein mit dem anderen Bauteil verbundenes Sensortarget umfassend mindestens eine Targeteinheit aufweist, wobei der Sensor ausgebildet ist zur Erfassung der relativen Position des Sensortargets. Ein Verfahren zum Betrieb einer derartigen Lenksäule ist ebenfalls Gegenstand der Erfindung.

Eine derartige Lenksäule weist an ihrem bezüglich der Fahrtrichtung des Fahrzeugs hinteren, der Fahrerposition zugewandten Ende eine manuelle Lenkhandhabe zur Eingabe von Lenkbefehlen auf, beispielsweise ein in einer Stelleinheit um eine Längsachse drehbares Lenkrad. Mit Abstand zu diesem lenkradseitigen Ende ist die Lenksäule in einem karosserieseitigen Bereich, üblicherweise über eine Trageinheit, an der Fahrzeugkarosserie befestigt.

Zur bedienungsfreundlichen Anpassung der Lenkradposition an die Fahrerposition ist vorgesehen, dass für eine Längsverstellung die Lenkhandhabe relativ zur Fahrzeugkarosserie in der durch die Längsachse gegebenen Längsrichtung positionierbar ist, und für eine Höhenverstellung quer zur Längsrichtung in einer Höhenrichtung positionierbar ist. Zur Realisierung der Längsverstellung kann eine die Lenkhandhabe tragende Stelleinheit in einer Manteleinheit, die auch als Führungskasten oder Kastenschwinge bezeichnet werden kann, teleskopierbar in Längsrichtung aufgenommen sein, welche eine erste Verstellrichtung definiert. Die Höhenverstellung kann dadurch erfolgen, dass die Manteleinheit um eine horizontale Achse verschwenkbar oder verschiebbar in einem vorderen Bereich an der Trageinheit gelagert ist, so dass die Lenkhandhabe in der Höhenrichtung verschwenkbar ist, welche eine zweite, zur Längsrichtung nichtparallele Verstellrichtung der Stelleinheit relativ zur Trageinheit definiert.

Zur optimalen Aktivierung von Lenksäulen-bezogenen Sicherheitssystemen, zur automatisierten Einstellung einer individuellen Lenkradposition, oder um die Lenksäule im autonomen Fahrbetrieb eines autonom fahrenden Fahrzeugs aus der Bedienposition in eine davon entfernte Verstauposition außerhalb des Bedienbereichs zu verstellen, ist die Erfassung derjeweils aktuellen Verstellposition in beiden Verstellrichtungen erforderlich. Hierzu ist im Stand der Technik beispielsweise aus der DE 10 2020 202 536 A1 eine Lenksäule mit einer Positionserfassungseinrichtung bekannt, die einen Sensor und ein damit zusammenwirkendes Sensortarget aufweist, zur Erfassung der Position von relativ zueinander bewegbaren Bauteilen. Hierzu ist für jede der zwei Verstellrichtungen eine mit einem Bauteil, beispielsweise der Manteleinheit oder der Trageinheit, verbundene Sensoreinheit vorgesehen, die mit einer Targeteinheit zusammenwirkt, welche an einem anderen, relativ zu dem einen Bauteil verstellbaren Bauteil, beispielsweise der Stelleinheit oder der Manteleinheit, fixiert ist. Für jede der beiden Verstellrichtungen ist ein aus einer Sensoreinheit und einer korrespondierenden Targeteinheit gebildetes Sensorpaar vorgesehen, mit jeweils einem eindimensionalen, linear in der jeweiligen Verstellrichtung erstreckten Messabschnitt. Dadurch kann jeweils von einer Sensoreinheit und der zugeordneten Targeteinheit die relative Positionierung von zwei in einer Verstellrichtung relativ zuenander verstellbaren Bauteilen erfasst und als elektrisches Messsignal an eine elektronische Steuereinheit weitergeleitet werden. Diese kann daraus elektrische Steuersignale erzeugen und elektromotorische Stellantriebe ansteuern, um die Lenksäule automatisiert in den beiden Verstellrichtungen zu verstellen, beispielsweise in die Verstauposition oder eine Sicherheitsposition.

Eine Lenksäule der eingangs genannten Art ist aus der DE 10 2020 202 536 A1 bekannt, die eine Positionserfassungseinrichtung zur Erfassung der Längsverstellung aufweist. Aus der DE 10 2021 108 224 A1 ist eine Lenksäule mit einer Positionserfassungseinrichtung bekannt, die zur Erfassung der Höhenverstellung ausgebildet ist.

Dadurch, dass in der bekannten Positionserfassungseinrichtung für jede der beiden Verstellrichtungen jeweils eine Sensoreinheit und eine korrespondierende Targeteinheit vorgesehen sein müssen, ergibt sich ein relativ hoher Fertigungs- und Montageaufwand, und ein hoher Bauraumbedarf.

Angesichts der vorangehend erläuterten Problematik ist es eine Aufgabe der vorliegenden Erfindung, eine Positionserfassung in zwei Verstellrichtungen mit geringerem Aufwand zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, die zwei relativ zueinander in zwei nichtparallelen Verstellrichtungen verstellbare Bauteile und eine Positionserfassungseinrichtung aufweist, die einen mit dem einem Bauteil verbundenen Sensor umfassend mindestens eine Sensoreinheit aufweist, und ein mit dem anderen Bauteil verbundenes Sensortarget umfassend mindestens eine Targeteinheit aufweist, wobei der Sensor ausgebildet ist zur Erfassung der relativen Position des Sensortargets, ist erfindungsgemäß vorgesehen, dass die Targeteinheit einen in den zwei Verstellrichtungen erstreckten Messabschnitt aufweist, der eine in jeder der zwei Verstellrichtungen variierende lokale Messgröße aufweist, die von der Sensoreinheit lokal erfassbar ist.

Im Folgenden werden die zwei Verstellrichtungen gleichbedeutend auch als die beiden Verstellrichtungen bezeichnet. Die wirkungsmäßige Kombination einer Sensoreinheit mit einer zugeordneten Targeteinheit kann auch als Sensorpaar bezeichnet sein.

Die erfindungsgemäß ausgebildete Targeteinheit zeichnet sich dadurch aus, dass sie einen zweidimensional wirksamen Messabschnitt aufweist, der ausgestaltet ist, um Positionsmessungen in zwei nichtparallelen Messrichtungen zu ermöglichen. Er erstreckt sich bevorzugt parallel zu einer durch die beiden Verstellrichtungen aufgespannten Messebene. Die zur Positionsmessung nutzbare Fläche des Messabschnitts bildet eine zweidimensionale Messfläche, die mit der Gesamtfläche des Messabschnitts identisch sein kann.

Der Messabschnitt weist in jedem definierten Flächenabschnitt des Messabschnitts oder in jedem Punkt, der einer definierten Flächenkoordinate innerhalb des Messabschnitts entspricht, eine lokale, definierte Messgröße auf, die sich über die Erstreckung in jeder der beiden möglichen Verstellrichtungen gesehen verändert, beispielsweise einen Gradienten. Beispielsweise kann die Messgröße in der Längsrichtung ansteigen, und in jedem Punkt der Längserstreckung quer dazu in der Höhenrichtung ansteigen. Dabei kann der Verlauf der Messgröße in einer Verstellrichtung gesehen linear, nichtlinear, stetig oder nichtstetig ausgestaltet sein.

Ein Vorteil ist, dass die lokale Messgröße mittels einer einzigen Sensoreinheit erfasst werden kann. Der dabei ermittelte lokale Messwert kann gleichzeitig mit einer Längsposition und einer Höhenposition der relativ zueinander verstellbaren Bauteile korreliert sein. Ein solcher Messwert kann als zweidimensionaler Messwert bezeichnet werden, im Gegensatz zu den zwei separaten eindimensionalen Messwerten im Stand der Technik. Entsprechend kann ein erfindungsgemäßer Sensor, der entsprechend als zweidimensionaler Sensor bezeichnet werden kann, zur Erfassung beider Verstellrichtungen in vorteilhafter Weise durch eine einzige Targeteinheit im Zusammenwirken mit einer Sensoreinheit realisiert werden, bevorzugt ebenfalls mit einer einzigen Sensoreinheit. Als Vorteil ist ein geringerer Fertigungs- und Montageaufwand realisierbar, sowie eine kleinere Baugröße.

Ein weiterer Vorteil des erfindungsgemäß integrierten zweidimensionalen Sensors ist, dass die Funktions- und Betriebssicherheit gegenüber den zwei separaten Sensor- und Targeteinheiten im Stand der Technik bei gleichzeitig geringerem Aufwand erhöht werden kann.

Bevorzugt kann vorgesehen sein, dass die Targeteinheit flächenhaft in den zwei Verstellrichtungen erstreckt ist. Zumindest der Messabschnitt kann in einer zur Längsrichtung und zur Höhenrichtung parallelen Messebene flächenhaft ausgedehnt sein. Dabei kann jeder Punkt bzw. jeder definierte Flächenabschnitt der Messebene innerhalb des Messabschnitts bevorzugt mit einer eindeutig definierten Messgröße korreliert sein. Ein Vorteil ist, dass die Fläche des Messabschnitts, welche die zur Positionsbestimmung in den beiden Verstellrichtungen nutzbare Meßfläche darstellt, Hinsichtlich ihrer Abmessungen und des Verlaufs der Messgrö-ßen mit geringem konstruktiven Aufwand an unterschiedliche Bauformen und Typen von Lenksäulen angepasst werden können.

Es kann vorteilhaft sein, dass die Targeteinheit einteilig ausgebildet ist. Als vorteilhafte Weiterbildung ist es möglich, dass die Targeteinheit einstückig ausgebildet ist. Dadurch können Herstellung und Montage vereinfacht werden. Außerdem können der erforderliche Bauraum und das Gewicht in vorteilhafter Weise reduziert werden.

Bevorzugt kann vorgesehen sein, dass die Sensoreinheit ausgebildet ist zur induktiven Erfassung des Sensortargets und die Targeteinheit ein Targetelement aufweist, welches lokal variierende magnetische Eigenschaften aufweist. Die Targeteinheit kann beispielsweise als Targetelement ausgebildet sein oder ein solches aufweisen, welches als lokalen Messwert eine über seine Messfläche veränderliche magnetische Leitfähigkeit aufweist. Die Sensoreinheit kann dazu einen induktiven Sensor umfassen. Dieser induziert ein lokales Magnetfeld in das Targetelement und erfasst als lokale Messgröße die Änderung des magnetischen Flusses durch das Targetelement, die durch die in der Messfläche zweidimensional variierende magnetische Leitfähigkeit bestimmt wird. Auf diese Weise kann durch eine lokale Messung des magnetischen Flusses ein zweidimensionaler Messwert erzeugt werden, der repräsentativ für die Position in den zwei Verstellrichtungen ist.

Bevorzugt kann die Targeteinheit, oder zumindest das Targetelement, ein metallisches Material aufweisen, beispielsweise Eisen oder ein anderes ferromagnetisches oder ferrimagnetisches Material, beispielsweise Ferrit oder in eine Kunststoffmatrix eingebettetes Ferrit oder dergleichen. Es ist denkbar und möglich, das Targetelement oder die Targeteinheit als Ganzes durch einen Blechabschnitt, ein Blechformteil, ein Umformteil oder dergleichen auszugestalten, beispielsweise aus Stahl. Alternativ kann das Targetelement beispielsweise aus einem mit magnetischem Material gefüllten thermoplastischen Kunststoff bereitgestellt werden, bevorzugt als Kuststoff-Spritzgussteil. In jedem Fall ist es vorteilhaft, dass die induktive Messung berührungslos und relativ robust und störunempfidlich ist, und das Targetelement mit geringem Aufwand bereitgestellt werden kann.

In der vorgenannten Ausführung kann es vorteilhaft sein, dass das Targetelement über seine Flächenerstreckung variierende Durchbrechungen und/oder Dickenänderungen normal zu seiner Flächenerstreckung aufweist. Durch die variierende Materialstärke, die beispielsweise in beiden Verstellrichtungen in dem Messabschnitt abschnittweise oder kontinuierlich ansteigend ausgebildet sein kann, und zusätzliche oder alternative Durchbrechungen in Form von Öffnungen, können die lokalen magnetischen Eigenschaften definiert vorgegeben werden.

Beispielsweise kann ein Blechformteil, beispielweise aus Stahl, ein über die Messfläche charakteristisch ausgestaltetes Muster von Durchbrechungen, Materialverdünnungen und/oder Materialverdickungen aufweisen. Vorzugsweise kann ein derartiges Targetelement einteilig oder einstückig ausgebildet sein. Es wird in jedem Fall ein geringer Fertigungsaufwand und ein robuster Aufbau ermöglicht.

Es ist möglich, dass die Sensoreinheit zur kapazitiven Messung einer über die Fläche variierenden lokalen kapazitiven Messgröße der Targeteinheit ausgebildet ist und die Targeteinheit eine lokal variierende kapazitive Messgröße aufweist. Der Sensor kann dabei als kapazitiver Messnehmer ausgebildet sein, und die Targeteinheit zumindest im Messabschnitt ein dielektrisches Material aufweisen. Dieses kapazitive Messverfahren basiert auf einer lokalen Veränderung eines eingekoppelten elektrischen Felds durch das Targetelement, welche mittels einer elektrischen Kapazitätsmessung einfach und berührungslos erfassbar ist. Dies ist ebenfalls robust und mit geringem Aufwand realisierbar.

Als weitere Alternative ist es möglich, dass die Sensoreinheit zur transmissiven Querschnittsmessung eines einer über die Fläche variierenden lokalen Querschnittsmessgröße der Targeteinheit ausgebildet ist und die Targeteinheit eine lokal variierende transmissive Querschnittsmessgröße aufweist. Mittels einer transmissiven Querschnittsmessung kann eine lokale Durchgangsfähigkeit des Messabschnitts als Messgröße genutzt werden. Beispielsweise kann das Targetelement eine über die Messfläche in beide Verstellrichtungen ansteigende Dicke haben. Zur Erfassung des lokalen Querschnitts können beispielsweise optische Messverfahren, Ultraschall-Messverfahren oder dergleichen zum Einsatz kommen, welche lokal veränderte Abmessungen und/oder Materialveränderungen oder dergleichen erfassen können.

Bevorzugt ist vorgesehen, dass die Positionserfassungseinrichtung eine elektronische Steuereinheit aufweist. Die Steuereinheit kann an die Sensoreinheit angeschlossen sein zur Auswertung der Messsignale, und Steuersignale ausgeben, beispielsweise zur Ansteuerung von elektrischen Verstellantrieben zur Verstellung der Lenksäule.

Es ist bevorzugt vorgesehen, dass motorische Verstellantriebe vorgesehen sind zur Verstellung der Bauteile. Bevorzugt ist für jede Verstellrichutng ein Verstellantrieb vorgesehen, folglich mindestens zwei Verstellantriebe. Diese können in an sich bekannter Weise beispielsweise Spindeltriebe aufweisen, die jeweils von einem elektrischen Motor angetrieben werden. Jeweils ein Verstellantrieb ist zwischen zwei relativ zueinander verstellbaren Bauteilen der Lenksäule eingegliedert, beispielsweise zur Längsverstellung in Längsrichtung zwischen einer Stelleinheit und einer Manteleinheit, und zur Höhenverstellung in Höhenrichtung zwischen Manteleinheit und einer Trageinheit. Derartige Verstellantriebe sind an sich bekannt, und zuverlässig und flexibel anpassbar.

Es ist möglich, dass die Bauteile eine Stelleinheit, eine Manteleinheit und eine Trageinheit umfassen. Die Stelleinheit mit der daran angebrachten Lenkhandhabe ist bevorzugt relativ zur Manteleinheit in Längsrichtung verstellbar, die eine erste Verstellrichtung bildet, und die Manteleinheit ist bevorzugt relativ zur Trageinheit in einer Höhenrichtung verstellbar, die eine quer zur Längsrichtung stehende, zweite Verstellrichtung bildet. Die erfindungsgemäße Positionserfassungseinrichtung kann zwischen der Trageinheit und der relativ dazu zweidimensional, in den zwei genannten Verstellrichtungen verstellbaren Stelleinheit wirkungsmäßig angeordnet sein. Durch die Erfindung kann die vollständige zweidimensionale Positionserfassung mittels jeweils einer einzigen Sensor- und Targeteinheit realisiert sein, die jeweils mit der Stelleinheit und der Trageinheit verbunden ist, oder umgekehrt.

Es ist möglich, dass der Sensor einen Absolutwertsensor und/oder einen Relativwertsensor aufweist. Ein Absolutwertsensor kann durch die oben beschriebenen induktiven und sonstigen Messverfahren realisiert sein, bei denen jeder zweidimensionalen Verstellposition ein eindeutiger absoluter Messwert zugeordnet ist. Vorteilhaft daran ist, dass keine Kalibrierung bei der Aufnahme des Betriebs erforderlich ist. Es ist alternativ jedoch auch möglich, einen Relativwertsensor einzusetzen, beispielsweise einen Inkrementalgeber, wobei als Messgröße beispielsweise ein über die Messfläche des Messabschnitts variierendes Inkrementalmuster ausgewertet wird. Bei derartigen Messverfahren ist allerdings in der Regel bei Inbetriebnahme jeweils eine Kalibrierung erforderlich.

Eine vorteilhafte Ausführung kann vorsehen, dass die Sensoreinheit mindestens zwei Sensorelemente aufweist. Dabei ist jedes der Sensorelemente ausgebildet zur Erfassung der erfindungsgemäßen lokalen Messgröße. Durch einen Vergleich der von den zwei oder mehr Sensorelementen gelieferten Messwerte kann die Messgenauigkeit erhöht werden, und es wird mit geringem Aufwand eine redundante Ausgestaltung der Positionserfassungseinrichtung ermöglicht.

Es kann vorgesehen sein, dass die Lenksäule als konventionelle Lenksäule ausgebildet ist, bei der die Lenkhandhabe, beispielsweise ein Lenkrad, eine mechanische Verbindung mit den zu lenkenden Rädern aufweist. Vorteilhaft ist der Einsatz der Erfindung insbesondere auch bei einer Steer-by-Wire-Lenksäule. In einem Steer-by-Wire-Lenksystem wird die Betätigung eines Lenkeingabemittels, welches nicht mechanisch mit den zu lenkenden Rädern verbunden ist, beispielsweise die Drehung einer Lenkwelle mittels eines Lenkrads, mittels elektronischer Sensoren erfasst und in ein elektrisches Steuersignal zur Ansteuerung von elektrischen Lenkaktuatoren umgesetzt, welche einen Lenkeinschlag der lenkbaren Räder bewirken. Steer-by-Wire-Lenksysteme können bevorzugt in autonom fahrenden Fahrzeugen eingesetzt werden, bei denen die Lenksäule während des autonomen Fahrbetriebs automatisiert in eine Verstauposition außerhalb der Bedienposition verstellt wird. Zur Positionserfassung bei den dabei auftretenden relativ großen Verstellwegen ist die erfindungsgemäße Positionserfassungseinrichtung besonders gut geeignet.

Die Erfindung umfasst weiterhin ein Verfahren zum Betrieb einer vorangehend beschriebenen Lenksäule, die zwei relativ zueinander in zwei nichtparallelen Verstellrichtungen verstellbare Bauteile und eine Positionserfassungseinrichtung aufweist, die einen mit einem Bauteil verbundenen Sensor umfassend mindestens eine Sensoreinheit aufweist, und ein mit dem anderen Bauteil verbundenes Sensortarget umfassend mindestens eine Targeteinheit aufweist, wobei der Sensor ausgebildet ist zur Erfassung der relativen Position des Sensortargets in den zwei Verstellrichtungen, wobei erfindungsgemäß vorgesehen ist, dass die Targeteinheit einen in den zwei Verstellrichtungen erstreckten Messabschnitt aufweist, der eine in jeder der zwei Verstellrichtungen variierende lokale Messgröße aufweist, die von der Sensoreinheit als zweidimensionaler Positionsmesswert erfasst wird.

Durch das erfindungsgemäße Verfahren können in vorteilhafter Weise die oben im Zusammenhang mit der Lenksäule erläuterten Funktionen realisiert werden, die sämtliche Verfahrensmerkmale im Sinne der Erfindung darstellen können. Dabei ist ein Vorteil, dass mittels einer einzigen Targeteinheit zweidimensionale Messwerte erfasst werden können, die eine vereinfachte Steuerung der Verstellung ermöglichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer schematischen perspektivischen Ansicht,
- Figur 2: die Lenksäule gemäß Figur 1 in einer weiteren perspektivischen Ansicht,
- Figur 3: eine Seitenansicht der Lenksäule gemäß Figur 1 und 2,
- Figur 4: eine vergrößerte Detailansicht aus Figur 3,
- Figur 5: ein Targetelement der Lenksäule gemäß Figuren 1 bis 4 in einer separaten Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

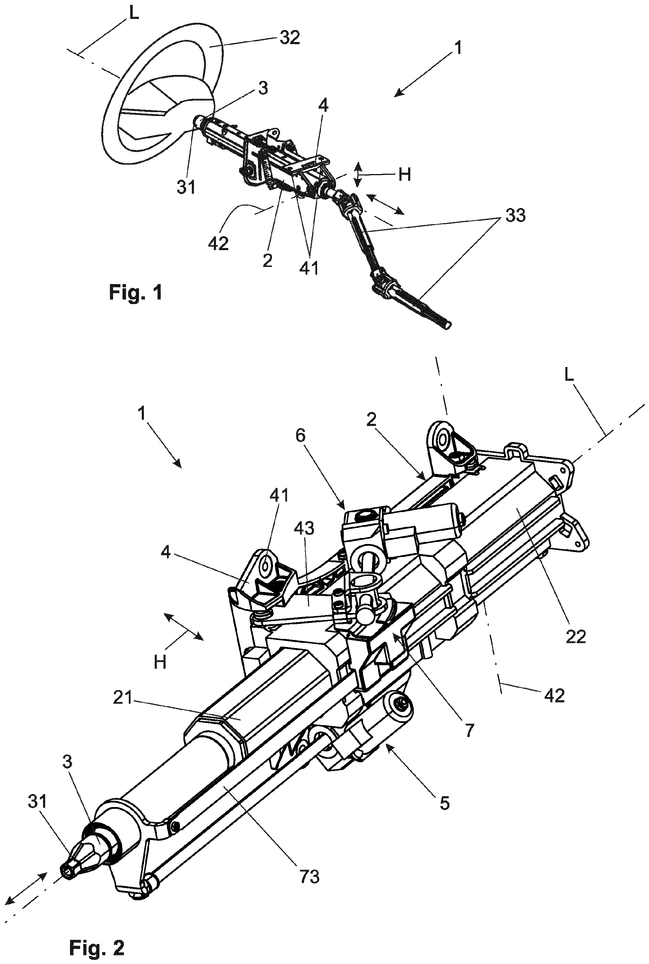

Fig. 1 zeigt eine Lenksäule 1 als Teil eines Lenksystems eines hier nicht dargestellten Kraftfahrzeugs.

Die Lenksäule 1 umfasst eine Manteleinheit 2, in der eine Lenkspindel 3 um eine Längsachse L drehbar gelagert ist. Am bezüglich der Fahrtrichtung hinteren, der Fahrerposition zugewandten Endabschnitt ist an einem Befestigungsabschnitt 31 ein Lenkrad 32 befestigt. Die Lenksäule 1 kann wie in Figur 1 gezeigt als konventionelle Lenksäule ausgestaltet sein, bei der die Lenkspindel 3 über Zwischenwellen 33 mechanisch mit lenkbaren Rädern gekoppelt ist. Alternativ kann die Lenksäule 1 als Steer-by-Wire-Lenksäule ausgebildet sein, bei der die Lenkspindel 3 nicht mechanisch mit zu lenkenden Rädern verbunden ist, und nur hinten, fahrerseitig zur Anbringung des Lenkrads 32 vorsteht. Die Zwischenwellen 33 sind dabei nicht vorhanden.

Die Manteleinheit 2 ist in einer Trageinheit 4 gehalten, die an der Karosserie des Fahrzeugs anbringbar ist. Hierzu kann die Trageinheit 4 Befestigungsmittel 41 aufweisen, beispielsweise Befestigungsbohrungen oder dergleichen.

Das Lenkrad 32 ist relativ zur der im eingebauten Zustand karosseriefesten Trageinheit 4 in der durch die Längsachse L gegebenen Längsrichtung verstellbar, wie mit dem Doppelpfeil angedeutet ist. Zur Höhenverstellung ist das Lenkrad 32 bezüglich der Trageinheit 4 quer zur Längsachse L auf oder ab in einer Höhenrichtung H verstellbar, wie ebenfalls mit einem Doppelpfeil angedeutet ist.

Die Längsachse L definiert eine erste Verstellrichtung, und die Höhenrichtung H eine zweite Verstellrichtung, die gemeinsam auch als die beiden Verstellrichtungen bezeichnet werden.

Figur 2 zeigt die Lenksäule 1 vergrößert in einer seitlich gekippten perspektivischen Ansicht.

Die Lenkspindel 3 ist in einem Innenmantel 21 um die Längsachse L drehbar gelagert. Zur Längsverstellung ist dieser Innenmantel 21 in einem Außenmantel 22 der Manteleinheit 2 in Richtung der Längsachse L teleskopierbar aufgenommen.

Zur Höhenverstellung ist die Trageinheit 2, konkret der Außenmantel 22, in einem karosserienahen, bezüglich der Fahrtrichtung vorderen Bereich um eine horizontal, quer zur Längsachse L liegende Schwenkachse 42 verschwenkbar gelagert. Durch Verschwenken um diese Schwenkachse 42 kann das an dem fahrerseitigen, karosseriefernen hinteren Ende der Lenkspindel 3 angebrachte Lenkrad 32 in der Höhenrichtung H verstellt werden.

Zur motorischen Längsverstellung ist ein erster Verstellantrieb 5 vorgesehen, der beispielsweise in an sich bekannter Weise als Spindeltrieb ausgebildet sein kann und zwischen dem Innenmantel 21 und dem Außenmantel 22 wirkungsmäßig eingesetzt ist.

Zur motorischen Höhenverstellung ist ein zweiter Verstellantrieb 6 vorgesehen, der beispielsweise ebenfalls in an sich bekannter Weise als Spindeltrieb ausgebildet sein kann und zwischen der Manteleinheit 2 und der Trageinheit 4 wirkungsmäßig eingesetzt ist.

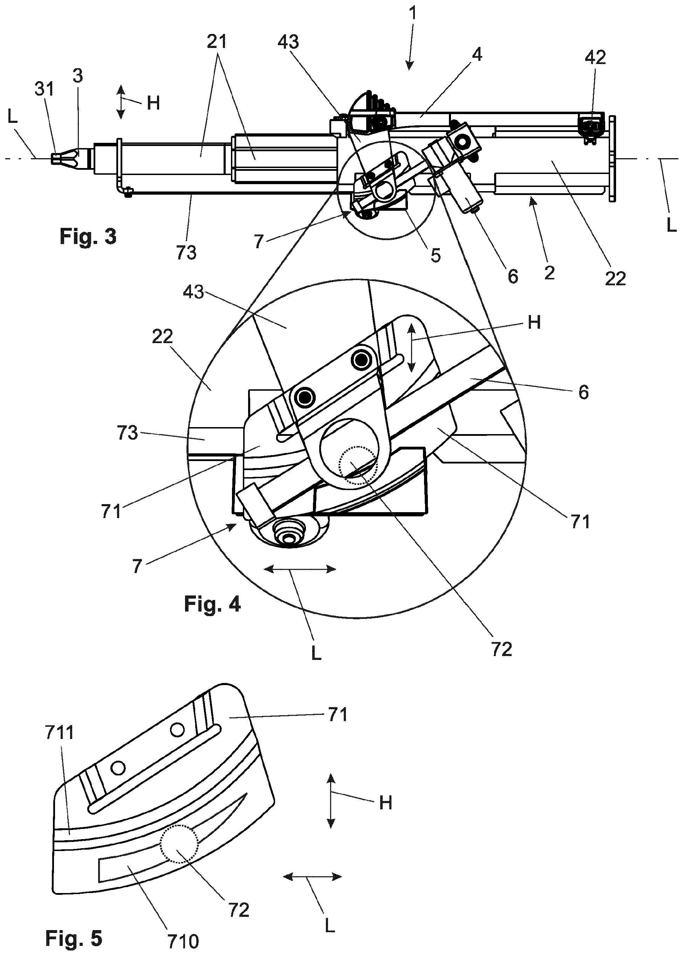

Figur 3 zeigt eine Seitenansicht der Lenksäule 1 quer zur Längsachse L.

Eine Positionserfassungseinrichtung 7, die in dem in Figur 4 gezeigten Ausschnitt von Figur 3 vergrößert dargestellt ist, umfasst in dem gezeigten Beispiel eine Targeteinheit mit einem einzigen Targetelement 71, welches mit einer Sensoreinheit umfassend ein Sensorelement 72 zusammenwirkt, welches in Figur 4 gestrichelt eingezeichnet ist. In dieser Ausführung bildet das Targetelement 71 die erfindungsgemäße Targeteinheit aus.

Das Targetelement 71 ist über ein Verbindungsmittel, hier ein langgestrecktes Fixierelement 73 im Bereich des Austritts der Lenkspindel 3 an dem Innenmantel 21 fixiert. Relativ zum Außenmantel 22 ist das Targetelement 71 in Längsrichtung verlagerbar, beispielsweise durch eine lineare Führung oder dergleichen bewegbar an dem Außenmantel 22 geführt.

Bei einer Längsverstellung wird entsprechend das Targetelement 71 relativ zur Trageinheit 4 in der durch die Längsachse L gegebenen Verstellrichtung bewegt, also in der ersten Verstellrichtung bezüglich der Trageinheit 4 nach vorn oder hinten bewegt, wie in Figur 4 mit dem Doppelpfeil angedeutet ist.

Bei einer Höhenverstellung wird das Targetelement 71 zusammen mit der Manteleinheit 2 relativ zur Trageinheit 4 in der Höhenrichtung H nach oben oder unten bewegt, wie in Figur 4 mit dem Doppelpfeil angedeutet ist.

Das Sensorelement 72 ist relativ zur Manteleinheit 2 positionsfest mit der Trageinheit 4 verbunden, beispielsweise an einer Seitenwange 43 der Trageinheit 4 fixiert. Entsprechend wird das Targetelement 71 parallel zu einer durch die Längsachse L und die Höhenrichtung aufgespannten Messebene - der sogenannten L-H-Messebene - relativ zu dem Sensorelement 72 bewegt. Diese Relativbewegung kann entsprechend zweidimensional in den zwei durch die Längsachse L und die Höhenrichtung H definierten Verstellrichtungen erfolgen.

Das Targetelement 71 ist zusammen mit dem - wiederum schematisch gestrichelt eingezeichneten - Sensorelement 72 in Figur 5 separat dargestellt. Es ist deutlich erkennbar, wie das Targetelement 71 flächenhaft parallel zu der L-H-Messebene erstreckt ist.

Das Targetelement 71 kann bevorzugt einstückig aus einem metallischen Material ausgebildet sein, beispielsweise als Kaltumformteil aus Stahl oder dergleichen. Es ist auch möglich, dass es ein ferromagnetisches oder ferrimagnetisches Material aufweist, welches beispielsweise in eine Kunststoffmatrix eingebettet sein kann. Dann kann das Targetelement 71 beispielsweise auch als bevorzugt einstückiges Kunststoff-Spritzgussteil ausgeführt sein oder ein solches aufweisen.

Zur Ausbildung einer über die L-H-Messebene variierenden Messgröße kann das Targetelement 71 in einem flächenhaft erstreckten Messabschnitt, der über eine Teilfläche oder die Gesamtfläche des Targetelements 71 ausgedehnt sein kann, beispielsweise eine oder mehrere Durchbrechungen 710, und zusätzlich oder alternativ Dickenänderungen 711 wie lokale Verdickungen und/oder Verdünnungen aufweisen, beispielsweise nutförmige Vertiefungen oder Einformungen, und/oder wulst- oder stegartige Vorsprünge oder dergleichen.

Die Durchbrechungen 710 bzw. die Dickenänderungen 711 erzeugen eine in den zwei Verstellrichtungen L und H variierende lokale magnetische Leitfähigkeit. Diese kann mittels des mindestens einen induktiven Sensor aufweisende Sensorelements 72 lokal gemessen und als zweidimensionaler Messwert an eine Steuereinheit ausgegeben werden.

Es können auch hier nicht explizit beschrieben, andere zweidimensionale Messverfahren zwischen dem flächenhaften Targetelement 71 und dem korrespondierenden Sensorelement 72 realisiert sein, beispielsweise auch durch eine lokale kapazitive oder optische Messung, Messung mittels Ultraschall oder dergleichen, oder durch andere in der Fläche positionssensitive Messverfahren.

### Bezugszeichenliste

- 1: Lenksäule
- 2: Manteleinheit
- 21: Innenmantel
- 22: Außenmantel
- 3: Lenkspindel
- 31: Befestigungsabschnitt
- 32: Lenkrad
- 4: Trageinheit
- 41: Befestigungsmittel
- 42: Schwenkachse
- 43: Seitenwange
- 5: Verstellantrieb
- 6: Verstellantrieb
- 7: Positionserfassungseinrichtung
- 71: Targetelement (=Targeteinheit)
- 710: Durchbrechungen
- 711: Dickenänderungen
- 72: Sensorelement
- 73: Fixierelement

- L: Längsachse
- H: Höhenrichtung

## Patentansprüche

1. Lenksäule (1) für ein Kraftfahrzeug, die zwei relativ zueinander in zwei nichtparallelen Verstellrichtungen (L, H) verstellbare Bauteile (3, 4) und eine Positionserfassungseinrichtung (7) aufweist, die einen mit dem einen Bauteil (3) verbundenen Sensor umfassend mindestens eine Sensoreinheit (72) aufweist, und ein mit dem anderen Bauteil (4) verbundenes Sensortarget umfassend mindestens eine Targeteinheit (71) aufweist, wobei der Sensor ausgebildet ist zur Erfassung der relativen Position des Sensortargets,
**dadurch gekennzeichnet,**
**dass** die Targeteinheit (71) einen in den zwei Verstellrichtungen (L, H) erstreckten Messabschnitt aufweist, der eine in jeder der zwei Verstellrichtungen (L, H) variierende lokale Messgröße aufweist, die von der Sensoreinheit (72) lokal erfassbar ist.

2. Lenksystem nach Anspruch 1, **dadurch gekennzeichnet, dass** die Targeteinheit (71) flächenhaft in den zwei Verstellrichtungen (L, H) erstreckt ist.

3. Lenksäule nach einem der vorangehenden Ansprüche, **dadurch gekennzeichnet, dass** die Targeteinheit (71) einteilig ausgebildet ist.

4. Lenksäule nach einem der vorangehenden Ansprüche, **dadurch gekennzeichnet, dass** die Targeteinheit (71) einstückig ausgebildet ist.

5. Lenksäule nach einem der vorangehenden Ansprüche, **dadurch gekennzeichnet, dass** die Sensoreinheit (72) ausgebildet ist zur induktiven Erfassung des Sensortargets und die Targeteinheit (71) ein Targetelement (71) aufweist, welches lokal variierende magnetische Eigenschaften aufweist.

6. Lenksäule nach Anspruch 5, **dadurch gekennzeichnet, dass** das Targetelement (71) über seine Flächenerstreckung variierende Durchbrechungen (710) und/oder Dickenänderungen (711) normal zu seiner Flächenerstreckung aufweist.

7. Lenksäule nach einem der vorangehenden Ansprüche, **dadurch gekennzeichnet, dass** die Sensoreinheit (72) zur kapazitiven Messung einer über die Fläche variierenden lokalen kapazitiven Messgröße der Targeteinheit ausgebildet ist und die Targeteinheit eine lokal variierende kapazitive Messgröße aufweist.

8. Lenksäule nach einem der vorangehenden Ansprüche, **dadurch gekennzeichnet, dass** die Sensoreinheit (72) zur transmissiven Querschnittsmessung eines einer über die Fläche variierenden lokalen Querschnittsmessgröße der Targeteinheit ausgebildet ist und die Targeteinheit eine lokal variierende transmissive Querschnittsmessgröße aufweist.

9. Lenksäule nach einem der vorangehenden Ansprüche, **dadurch gekennzeichnet, dass** die Positionserfassungseinrichtung (7) eine elektronische Steuereinheit aufweist.

10. Lenksäule nach einem der vorangehenden Ansprüche, **dadurch gekennzeichnet, dass** motorische Verstellantriebe (5, 6) vorgesehen sind zur Verstellung der Bauteile.

11. Lenksäule nach einem der vorangehenden Ansprüche, **dadurch gekennzeichnet, dass** die Bauteile eine Stelleinheit (3, 21), eine Manteleinheit (2) und eine Trageinheit (4) umfassen.

12. Lenksäule nach einem der vorangehenden Ansprüche, **dadurch gekennzeichnet, dass** der Sensor einen Absolutwertsensor und/oder einen Relativwertsensor aufweist.

13. Lenksäule nach einem der vorangehenden Ansprüche, **dadurch gekennzeichnet, dass** sie als Steer-by-Wire-Lenksäule ausgebildet ist.

14. Verfahren zum Betrieb einer Lenksäule nach einem der vorangehenden Ansprüche 1 bis 13, die zwei relativ zueinander in zwei nichtparallelen Verstellrichtungen (L, H) verstellbare Bauteile (3, 4) und eine Positionserfassungseinrichtung (7) aufweist, die ein mit dem einen Bauteil (3) verbundenen Sensor umfassend mindestens eine Sensoreinheit (72) aufweist, und ein mit dem anderen Bauteil verbundenes Sensortarget umfassend mindestens eine Targeteinheit (71) aufweist, wobei der Sensor ausgebildet ist zur Erfassung der relativen Position des Sensortargets in den zwei Verstellrichtungen (L, H),
**dadurch gekennzeichnet,**
**dass** die Targeteinheit (71) einen in den zwei Verstellrichtungen (L, H) erstreckten Messabschnitt aufweist, der eine in jeder der zwei Verstellrichtungen (L, H) variierende lokale Messgröße aufweist, die von der Sensoreinheit (72) als zweidimensionaler Positionsmesswert erfasst wird.

## Claims

1. Steering column (1) for a motor vehicle, which has two components (3, 4) adjustable relative to one another in two non-parallel adjustment directions (L, H) and a position detection device (7) which has a sensor connected to the one component (3) comprising at least one sensor unit (72), and has a sensor target connected to the other component (4) comprising at least one target unit (71), the sensor being configured to detect the relative position of the sensor target,
**characterized in that**
the target unit (71) has a measurement portion extending in the two adjustment directions (L, H) which has a local measuring quantity varying in each of the two adjustment directions (L, H) that can be detected locally by the sensor unit (72).

2. Steering system according to Claim 1, **characterized in that** the target unit (71) extends in a planar manner in the two adjustment directions (L, H).

3. Steering column according to either of the preceding claims, **characterized in that** the target unit (71) is configured as one component.

4. Steering column according to one of the preceding claims, **characterized in that** the target unit (71) is configured as one piece.

5. Steering column according to one of the preceding claims, **characterized in that** the sensor unit (72) is configured for inductive detection of the sensor target and the target unit (71) has a target element (71) which has locally varying magnetic properties.

6. Steering column according to Claim 5, **characterized in that** the target element (71) has perforations (710) and/or thickness changes (711) which vary over its surface extent and are normal to its surface extent.

7. Steering column according to one of the preceding claims, **characterized in that** the sensor unit (72) is configured for capacitive measurement of a local capacitive measuring quantity of the target unit which varies over the surface, and the target unit has a locally varying capacitive measuring quantity.

8. Steering column according to one of the preceding claims, **characterized in that** the sensor unit (72) is configured for transmissive cross-sectional measurement of one of a local cross-sectional measuring quantity of the target unit which varies over the surface, and the target unit has a locally varying transmissive cross-sectional measuring quantity.

9. Steering column according to one of the preceding claims, **characterized in that** the position detection device (7) has an electronic control unit.

10. Steering column according to one of the preceding claims, **characterized in that** motorized adjusting drives (5, 6) are provided for adjusting the components.

11. Steering column according to one of the preceding claims, **characterized in that** the components comprise a setting unit (3, 21), a casing unit (2) and a support unit (4).

12. Steering column according to one of the preceding claims, **characterized in that** the sensor has an absolute value sensor and/or a relative value sensor.

13. Steering column according to one of the preceding claims, **characterized in that** it is configured as a steer-by-wire steering column.

14. Method for operating a steering column according to one of the preceding Claims 1 to 13, which has two components (3, 4) adjustable relative to one another in two non-parallel adjustment directions (L, H) and a position detection device (7) which has a sensor connected to the one component (3) comprising at least one sensor unit (72), and has a sensor target connected to the other component comprising at least one target unit (71), the sensor being configured to detect the relative position of the sensor target in the two adjustment directions (L, H),
**characterized in that**
the target unit (71) has a measurement portion extending in the two adjustment directions (L, H) which has a local measuring quantity varying in each of the two adjustment directions (L, H) that is detected by the sensor unit (72) as a two-dimensional position measured value.

## Revendications

1. Colonne de direction (1) pour un véhicule automobile, qui présente deux composants (3, 4) réglables l'un par rapport à l'autre dans deux directions de réglage (L, H) non parallèles et un dispositif de détection de position (7) qui présente un capteur relié à un composant (3) comprenant au moins une unité de capteur (72), et une cible de capteur reliée à l'autre composant (4) comprenant au moins une unité de cible (71), le capteur étant conçu pour détecter la position relative de la cible de capteur, **caractérisé en ce que**
**en ce que** l'unité cible (71) présente une section de mesure s'étendant dans les deux directions de réglage (L, H), qui présente une grandeur de mesure locale variant dans chacune des deux directions de réglage (L, H), qui peut être détectée localement par l'unité de capteur (72).

2. Colonne de direction selon la revendication 1, **caractérisé en ce que** l'unité cible (71) s'étend en surface dans les deux directions de réglage (L, H).

3. Colonne de direction selon l'une des revendications précédentes, **caractérisé en ce que** l'unité cible (71) est réalisée d'une seule pièce.

4. Colonne de direction selon l'une des revendications précédentes, **caractérisé en ce que** l'unité cible (71) est réalisée d'une seule pièce.

5. Colonne de direction selon l'une des revendications précédentes, **caractérisé en ce que** l'unité de capteur (72) est conçue pour la détection inductive de la cible de capteur et l'unité de cible (71) présente un élément de cible (71) qui présente des propriétés magnétiques variant localement.

6. Colonne de direction selon la revendication 5, **caractérisé en ce que** l'élément cible (71) présente des percées (710) et/ou des variations d'épaisseur (711) qui varient sur son étendue de surface et qui sont normales à son étendue de surface.

7. Colonne de direction selon l'une des revendications précédentes, **caractérisé en ce que** l'unité de capteur (72) est conçue pour la mesure capacitive d'une grandeur de mesure capacitive locale variant sur la surface de l'unité cible et l'unité cible présente une grandeur de mesure capacitive variant localement.

8. Colonne de direction selon l'une quelconque des revendications précédentes, **caractérisé en ce que** l'unité de capteur (72) est conçue pour mesurer par transmission la section transversale d'une grandeur de mesure de section transversale locale variant sur la surface de l'unité cible, et l'unité cible présente une grandeur de mesure de section transversale par transmission variant localement.

9. Colonne de direction selon l'une des revendications précédentes, **caractérisé en ce que** le dispositif de détection de position (7) comporte une unité de commande électronique.

10. Colonne de direction selon l'une des revendications précédentes, **caractérisé en ce que** des entraînements de réglage motorisés (5, 6) sont prévus pour le réglage des composants.

11. Colonne de direction selon l'une des revendications précédentes, **caractérisé en ce que** les composants comprennent une unité de réglage (3, 21), une unité d'enveloppe (2) et une unité de support (4).

12. Colonne de direction selon l'une des revendications précédentes, **caractérisé en ce que** le capteur comprend un capteur de valeur absolue et/ou un capteur de valeur relative.

13. Colonne de direction selon l'une des revendications précédentes, **caractérisé en ce qu'**elle est conçue comme une colonne de direction Steer-by-Wire.

14. Procédé de fonctionnement d'une colonne de direction selon l'une des revendications précédentes 1 à 13, qui présente deux composants (3, 4) réglables l'un par rapport à l'autre dans deux directions de réglage (L, H) non parallèles et un dispositif de détection de position (7) qui présente un capteur relié à l'un des composants (3) comprenant au moins une unité de capteur (72), et une cible de capteur reliée à l'autre composant comprenant au moins une unité de cible (71), le capteur étant conçu pour détecter la position relative de la cible de capteur dans les deux directions de réglage (L, H),
**caractérisé en ce que**
**en ce que** l'unité cible (71) présente une section de mesure s'étendant dans les deux directions de réglage (L, H), qui présente une grandeur de mesure locale variant dans chacune des deux directions de réglage (L, H), qui est saisie par l'unité de capteur (72) comme valeur de mesure de position bidimensionnelle.
